# EUROPEAN PATENT APPLICATION

(11) **EP 3 503 420 A1**
(43) Date of publication of application: **26.06.2019**
(21) Application number: 17210368.1
(22) Date of filing: 22.12.2017
(51) Int. Cl.: H04B 7/024, H04W 88/08

(54) **BASE STATION SYSTEM FOR TRANSMITTING DATA TOWARDS A USER ENTITY**

(71) Applicant: Deutsche Telekom AG, 53113 Bonn (DE)
(72) Inventor: Klatt, Axel, 50999 Köln (DE)
(74) Representative: Patentship Patentanwaltsgesellschaft mbH

(57) **Abstract**

The disclosure relates to a base station system for transmitting data towards a user entity (205) using beamforming in a communication cell. The base station system comprises: a distributed beamforming antenna having a first sub-array of antenna elements (203a) and a second sub-array of antenna elements (203b), the first sub-array of antenna elements (203a) and the second sub-array of antenna elements (203b) forming a composite array of antenna elements for generating a composite transmission beam (207) and being arranged spaced apart from each other; and a multiple-in-multiple-out (MIMO) base station (201) that is configured to handle communications of the user entity (205) in the communication cell using beamforming; wherein the first sub-array of antenna elements (203a) is co-located with the MIMO base station (201); wherein the second sub-array of antenna elements (203b) is spaced apart from the MIMO base station (201); and wherein the MIMO base station (201) is configured to steer the first sub-array of antenna elements (203a) to generate a first sub-beam (204a) that is spatially directed towards the user entity (205), and to steer the second sub-array of antenna elements (203b) to generate a second sub-beam (204b) that is spatially directed towards the user entity (205), wherein the first sub-beam (204a) and the second sub-beam (204b) superimpose to the composite transmission beam (207).

## Description

### TECHNICAL FIELD

In general, the present invention relates to the field of wireless communications. More specifically, the present invention relates to a base station system, a user entity and a corresponding method for transmitting data in a communication cell.

### BACKGROUND

To make use of available communication resources more efficiently, space diversity (also known as antenna diversity) can be used and being enhanced to the use of directional beams. For this purpose, a base station can use differently-oriented beams for communication with different user entities in the space dimension. Multiple Input Multiple Output (MIMO) Systems combine the transmission via multiple antenna elements and can create the above mentioned beams in a more selective manner. Such systems having a higher number of transmitting and receiving antenna elements are also referred to as Massive Multiple Input Multiple Output Systems (mMIMO).

Although it is possible to achieve significant beams and to cover a large space dimension (in terms of both azimuth and elevation) by means of a mMIMO array available in a single site, certain regions within the coverage area of the mMIMO system may still not be reached. Another problem is the shading in the urban environment, which can be caused for example by buildings, trees or other obstacles between the user entity and the base station therein. This problem can only be partially compensated by electromagnetic diffraction effects, in particular by increasing beam separation or resolution.

Furthermore, exposure limits for occupational and residential electromagnetic field (EMF) are often regulated in the mobile cell sites, which makes it even difficult to perform the operation of the mMIMO antenna arrays in combination with conventional cellular antennas, if not completely impossible.

In light of the above, there is a need for an improved base station system, allowing transmitting data towards a user entity.

### SUMMARY OF THE INVENTION

It is an object of the disclosure to provide an improved base station system, allowing transmitting data towards a user entity.

The foregoing and other objects are achieved by the subject matter of the independent claims. Further implementation forms are apparent from the dependent claims, the description and the figures.

Generally, the disclosure relates to a multiple-in-multiple-out (MIMO) base station, a distributed beamforming antenna, and a user entity as well as a corresponding method for transmitting data more efficiently and reliably towards a user entity in a communication network. More specifically, embodiments of the present disclosure can utilize a plurality of sub-arrays of antenna elements, which are arranged spaced apart from the MIMO base station of a cell, to transmit data of the associated cell in a decentralized manner to the user entity, such as a user equipment or a mobile phone or a vehicle communication system.

Thus, according to a first aspect the disclosure relates to a base station system for transmitting data towards a user entity using beamforming. The base station system comprises: a distributed beamforming antenna having a first sub-array of antenna elements and a second sub-array of antenna elements, the first sub-array of antenna elements and the second sub-array of antenna elements forming a composite array of antenna elements for generating a composite transmission beam and being arranged spaced apart from each other; a multiple-in-multiple-out (MIMO) base station that is configured to handle communications of the user entity in the communication cell using beamforming; wherein the first sub-array of antenna elements is co-located with the MIMO base station and the second sub-array of antenna elements is spaced apart from the MIMO base station; wherein the MIMO base station is configured to steer the first sub-array of antenna elements to generate a first sub-beam that is spatially directed towards the user entity, and to steer the second sub-array of antenna elements to generate a second sub-beam that is spatially directed towards the user entity; and wherein the first sub-beam and the second sub-beam superimpose to the composite transmission beam. An improved base station system is hence provided, allowing transmitting data towards a user entity in a more efficient and reliable manner.

In a further possible implementation form of the first aspect, the MIMO base station is configured to provide a first steering signal to the first sub-array of antenna elements for generating the first sub-beam, and to transmit a second steering signal to the second sub-array of antenna elements for generating the second sub-beam.

In a further possible implementation form of the first aspect, the second sub-array of antenna elements is connected to the MIMO base station using a fixed line, in particular a glass fiber, and the MIMO base station is configured to transmit the second steering signal to the second sub-array of antenna elements. Or the MIMO base station is configured to transmit a steering beam spatially directed towards the second sub-array of antenna elements with the second steering signal, and the second sub-array of antenna elements is configured to receive the steering beam with the second steering signal, and to generate the second sub-beam.

In a further possible implementation form of the first aspect, the MIMO base station is configured to provide the first steering signal comprising a first phase information for exciting the first sub-array of antenna elements to generate the first sub-beam, and the MIMO base station is configured to provide the second steering signal comprising a second phase information for exciting the second sub-array of antenna elements to generate the second sub-beam.

In a further possible implementation form of the first aspect, the MIMO base station is configured to retrieve the first phase information and the second phase information from a memory, in particular comprising a beamforming codebook, indicating phase information versus a direction of the respective sub-beam or versus a direction of the composite transmission beam.

In a further possible implementation form of the first aspect, the base station system comprises a beamforming transmitter being arranged spaced apart from the MIMO base station, wherein the second sub-array of antenna elements is co-located with the beamforming transmitter.

In a further possible implementation form of the first aspect, the beamforming transmitter is mobile, or the base station system comprises a drone carrying the base station transmitter.

In a further possible implementation form of the first aspect, the second sub-array of antenna elements is configured to receive a transmission beam carrying user data from the user entity, and to forward the user data using a forwarding beam directed towards the base station.

Thereby, the second sub-array of antenna elements can be provided to act as a fronthaul link for connecting to the centralized radio access network, i.e. the MIMO base station here.

In a further possible implementation form of the first aspect, the distributed beamforming antenna comprises a plurality of sub-array of antenna elements arranged spaced apart from the base station, and the second-subarray of antenna elements belongs to the plurality of sub-array of antenna elements, wherein the MIMO base station is configured to steer the each sub-array of antenna elements to generate a further sub-beam that is spatially directed towards the user entity.

Thereby, the data can efficiently be communicated across the entire communication cell with reduced transmission power per beamforming sub-array, as compared to the transmission power which would be required by the MIMO base station to transmit the data.

In a further possible implementation form of the first aspect, the base station is configured to simultaneously steer the plurality of sub-arrays of antenna elements to generate the composite transmission beam.

In a further possible implementation form of the first aspect, the MIMO base station is configured to select the second sub-array from the plurality of sub-arrays for generating the second sub-beam upon the basis of a link quality between the user entity and the sub-arrays of antenna elements or a location of the second sub-array in the communication cell.

In a further possible implementation form of the first aspect, the sub-arrays of antenna elements or the user entity are configured to measure the link quality, and transmit the measured link quality, in particular using beamforming, to the MIMO base station.

In a further possible implementation form of the first aspect, the link quality is determined at least one or a combination of the following measures: data rate, bite error rate, communication delay, packet error rate, communication bandwidth, quality of service indication, data priority, user service level agreement, in particular user priority.

In a further possible implementation form of the first aspect, the MIMO base station is configured to replace the second sub-array of antenna elements by another sub-array of antenna elements, if a link quality between the second sub-array of antenna elements and the user entity has deteriorated, in particular due to mobility of the user entity, the other sub-array of antenna elements becoming the second sub-array after replacement.

In a further possible implementation form of the first aspect, each sub-array of antenna elements covers a sub-area of the communication cell.

Thus, a micro-coverage of the communication cell can be achieved via the distributed antenna elements, allowing positions of the user entity to be detected more precisely.

In a further possible implementation form of the first aspect, the MIMO base station is configured to replace the second sub-array of antenna elements by another sub-array of antenna elements, if the user entity is located in a sub-area covered by the other sub-array of antenna elements.

Thereby, the sub-array of antenna elements that provides a better reception to the user entity after the movement of the user entity can handle the communication, allowing mobility support of the user entity.

In a further possible implementation form of the first aspect, the second sub-array of antenna elements is arranged in an area of the communication cell which is shaded with respect for transmission beams originating from the MIMO base station.

Thereby, the data can efficiently be communicated across the area of the communication cell, in particular in shaded urban regions which are difficult to reach using beamforming.

In a further possible implementation form of the first aspect, the MIMO base station is configured to handle communications in the communication cell using beamforming according the fifth generation (5G) communication technology or higher, and/or wherein the respective sub array of antenna elements is configured to transmit data according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

In a further possible implementation form of the first aspect, the distributed beamforming antenna forms a massive MIMO beamforming antenna.

Each respective array of antenna elements comprises at least 16 antenna elements for beam generation upon the basis of a predetermined MIMO codebook, in particular a MIMO codebook according to the 5G technology.

According to a second aspect, the disclosure relates to a user entity in a communiation cell, in particular a smartphone or a car communication system, which is capable of communicating with and receiving data from the base station system according to the first aspect, wherein the distributed beamforming antenna of the base station system comprises a first sub-array of antenna elements and a second sub-array of antenna elements, the first sub-array of antenna elements and the second sub-array of antenna elements forming a composite array of antenna elements for generating a composite transmission beam and being arranged spaced apart from each other, and wherein the MIMO base station of the base station system is configured to steer the first sub-array of antenna elements to generate a first sub-beam that is spatially directed towards the user entity, and to steer the second sub-array of antenna elements to generate a second sub-beam that is spatially directed towards the user entity.

The user entity is configured to receive the first sub-beam from the first sub-array of antenna elements and to receive the second sub-beam from the second sub-array of antenna elements, wherein the first sub-array of antenna elements is co-located with the MIMO base station and the second sub-array of antenna elements is spaced apart from the MIMO base station, and wherein the first sub-beam and the second sub-beam superimpose to the composite transmission beam.

The user entity can be further configured to establish a communication channel, in particular a random access channel, towards the MIMO base station using beamforming and to receive data from the MIMO base station.

In a further possible implementation form of the second aspect, the user entity can comprise a beamforming antenna, in particular a MIMO antenna arrangement, for transmitting or receiving a communication beam towards the MIMO base station and/or the distributed beamforming antenna. The beamforming antenna can additionally be configured to receive a broadcast signal. Optionally, the user entity can comprise a broadcast antenna capable of receiving the broadcast signal.

According to a third aspect, the disclosure relates to a communication method for transmitting data towards a user entity in a communication cell comprising a base station system, wherein the base station system comprises: a distributed beamforming antenna having a first sub-array of antenna elements and a second sub-array of antenna elements, the first sub-array of antenna elements and the second sub-array of antenna elements forming a composite array of antenna elements for generating a composite transmission beam and being arranged spaced apart from each other; and a multiple-in-multiple-out (MIMO) base station that is configured to handle communications of the user entity in the communication cell using beamforming.

The communication method comprises the following steps: steering the first sub-array of antenna elements to generate a first sub-beam that is spatially directed towards the user entity by the MIMO base station; steering the second sub-array of antenna elements to generate a second sub-beam that is spatially directed towards the user entity by the MIMO base station; receiving the first sub-beam from the first sub-array of antenna elements at the user entity; and receiving the second sub-beam from the second sub-array of antenna elements at the user entity.

The communication method can be implemented using the system according to the first aspect.

Furthermore, the user entity of the second aspect can be configured to communicate with the base station system using the communication method of the third aspect.

Thus, an improved communication method is provided, allowing transmitting data towards a user entity in a more efficient and reliable manner.

According to a fourth aspect, the disclosure relates to a computer program comprising a computer readable program code which, when executed on the MIMO base station and/or the distributed beamforming antenna of the base station system according to the first aspect, and/or on the user entity according to the second aspect, performs the method according to the third aspect.

According to a fifth aspect, the disclosure relates to a omputer program product comprising the computer program according to the fourth aspect.

### BRIEF DESCRIPTION OF THE DRAWINGS

Further embodiments of the invention will be described with respect to the following figures, wherein:
Figure 1 shows a schematic diagram of a communication network comprising a base station and a user entity according to the prior art;
Figure 2 shows a schematic diagram of a communication network comprising a base station, a plurality of sub-array of antenna elements and a user entity according to an embodiment; and
Figure 3 shows a diagram of a communication method for transmitting data according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

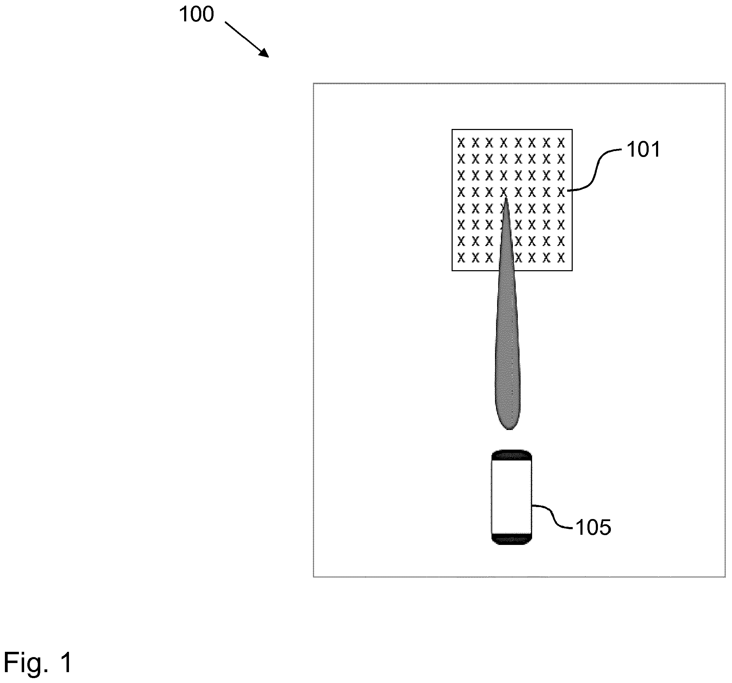

As shown in figure 1, a state-of-the-art massive MIMO system 100, which comprises a massive MIMO antenna array 101 for transmitting data to a user entity 105, can achieve significant beams and cover a large space dimension by means of the massive MIMO antenna array 101 available in a single site. However, the antenna array 101 may still fail to reach certain areas within the coverage. Furthermore, exposure limits for electromagnetic field (EMF) are often strictly regulated in mobile cell sites, which complicates the operation of the mMIMO antenna array in combination with conventional cellular antennas.

In view of the above, the present disclosure is based on the recognition that the problems in the state of the art can be solved by a plurality of sub-arrays of antenna elements, which are arranged spaced apart from and assigned to an actual base station of a cell. More specifically, embodiments of the present disclosure can utilize the plurality of sub-arrays of antenna elements to transmit data of the associated cell in a decentralized manner to the user entity, such as a user equipment or a mobile phone or a vehicle communication system.

In particular, the MIMO base station according to the embodiments can divide a massive MIMO antenna (e.g., an antenna with at least 64 active antenna elements to provide the beam shaping) into a plurality of small antenna arrays and to operate them in a spatially-distributed manner.

Thereby, spatially separating the radiation points of the mMIMO array and rejoining them by superposing and controlling the individual beams can, on the one hand, meet the local limits of the electromagnetic field (EMF) exposure and can, on the other hand, provide a solution for the effective supply of local areas in the coverage of the communication network.

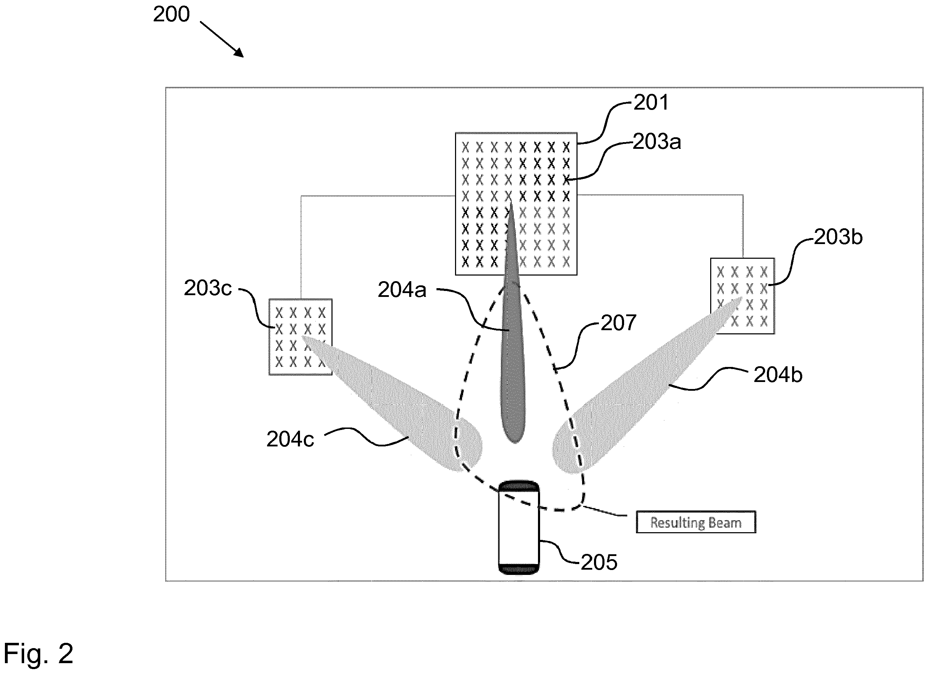

The system architecture for such a communication system will be further explained under reference to figure 2 in the following embodiments.

Figure 2 shows a schematic diagram of a communication network 200 according to an embodiment, wherein the communication network 200 comprises a multiple-in-multiple-out (MIMO) base station 201, a distributed beamforming antenna comprising a first sub-array of antenna elements 203a and a second sub-array of antenna elements 203b in a communication cell, as well as a user entity 205 according to an embodiment.

As can be seen in figure 2, the first sub-array of antenna elements 203a is co-located with the MIMO base station 201 and the second sub-array of antenna elements 203b is spaced apart from the MIMO base station 201. The second sub-array of antenna elements 203b can be connected to the MIMO base station 201 via a fixed line, for instance, a glass fiber.

The first sub-array of antenna elements 203a and the second sub-array of antenna elements 203b can form a composite array of antenna elements for generating a composite transmission beam 207.

In an embodiment, the distributed beamforming antenna forms a massive MIMO beamforming antenna and each respective sub-array of antenna elements 203a-b comprises at least 16 antenna elements, for beam generation upon the basis of a predetermined MIMO codebook, in particular a MIMO codebook according to the 5G technology.

In a further embodiment, the base station system can comprise a beamforming transmitter arranged spaced apart from the MIMO base station 201and the second sub-array of antenna elements 203b can be co-located with the beamforming transmitter. The beamforming transmitter is mobile; for instance, a drone or a vehicle can carry the beamforming transmitter.

The MIMO base station 201 and the distributed beamforming antenna are configured to handle communications of the user entity 105 in the communication cell using beamforming according the fifth generation (5G) communication technology or even more advanced communication technology, such as one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

As for the user entity 205, the user entity 205 may refer to a user equipment that provides a user with voice and/or data connectivity, a handheld device with a radio connection function, or another processing device connected to a radio modem. The user entity 205 may be wireless or mobile user equipment, such as a mobile phone, a vehicle communication system, and a computer with mobile user equipment, for example, may be a portable, pocket-sized, handheld, computer built-in, or in-vehicle mobile apparatus, which exchanges voice and/or data with the radio access network.

Furthermore, the user entity 205 can comprise a beamforming antenna, in particular a MIMO antenna arrangement, for transmitting or receiving a communication beam towards the MIMO base station 201 and the distributed beamforming antenna. The beamforming antenna of the user entity 205 can additionally be configured to receive a broadcast signal. Optionally, the user entity 205 can comprise a broadcast antenna capable of receiving the broadcast signal.

According to an embodiment, the MIMO base station 201 is configured to retrieve a first phase information and a second phase information from a memory, in particular with a beamforming codebook, indicating phase information versus a direction of the respective sub-beam or versus a direction of the composite transmission beam.

Next, the MIMO base station 201 is configured to steer the first sub-array of antenna elements 203a to generate a first sub-beam 204a that is spatially directed towards the user entity 205 by providing a first steering signal comprising the first phase information to the first sub-array of antenna elements 203a.

Similarly, the MIMO base station 201 can transmit a steering beam with a second steering signal comprising the second phase information to the second sub-array of antenna elements 203b and then steer the second sub-array of antenna elements 203b to generate a second sub-beam 204b that is spatially directed towards the user entity 205. The first sub-beam 204a and the second sub-beam 204b superimpose to the composite transmission beam 207 as mentioned above.

Moreover, the second sub-array of antenna elements 203b is configured to receive a transmission beam carrying user data from the user entity 205, and to forward the user data using a forwarding beam directed towards the MIMO base station 201.

In an embodiment, the distributed beamforming antenna can comprise a plurality of sub-array of antenna elements 203a-c arranged spaced apart from the base station 201, wherein the second sub array of antenna elements 203b belongs to the plurality of sub-array of antenna elements 203a-c. The MIMO base station 201 can steer the each sub-array of antenna elements 203a-c to generate a further sub-beam 204c that is spatially directed towards the user entity 205.

The user entity 205 can process each sub-beam 204a-c from the respective sub-array of antenna elements 203a-c independently. Alternatively, the base station 201 can also simultaneously steer the plurality of sub-arrays of antenna elements 203a-c to generate the composite transmission beam 207.

Each sub-array of antenna elements 203a-c covers a sub-area of the communication cell. The respective sub-arrays of antenna elements 203a-c or the user entity 205 are configured to measure a link quality, and transmit the measured link quality, in particular using beamforming, to the MIMO base station 201, wherein the link quality is determined at least one or a combination of the following measures: data rate, bite error rate, communication delay, packet error rate, communication bandwidth, quality of service indication, data priority, user service level agreement, in particular user priority.

Therefore, the MIMO base station 201 can select the second sub-array 203b from the plurality of sub-arrays 203a-c for generating the second sub-beam 204b upon the basis of the link quality between the user entity 205 and the sub-arrays of antenna elements 203a-c or a location of the second sub-array 203b in the communication cell.

If the link quality between the second sub-array of antenna elements 203b and the user entity 205 has however deteriorated, for instance, because of the movement of the user entity 205, the MIMO base station 201 can replace the second sub-array of antenna elements 203b by another sub-array of antenna elements, and the other sub-array of antenna elements can act as the second sub-array after replacement. In another case, the MIMO base station 201 can also replace the second sub-array of antenna elements 203b by another sub-array of antenna elements, if the user entity 205 is located in a sub-area covered by the other sub-array of antenna elements.

Thereby, a micro-coverage of the communication network can be achieved via the plurality of sub-arrays of antenna elements 203a-c, and the user entity 205 can be provided with mobility support. Spatial diversity can also be better exploited by the locally-distributed sub-arrays of antenna elements 203a-c.

In a further embodiment, the second sub-array of antenna elements 203b can be arranged in an area of the communication cell which is shaded with respect for transmission beams originating from the MIMO base station 201. Thereby, the data can efficiently be communicated across the area of the communication cell, in particular in shaded urban regions which are difficult to reach using beamforming.

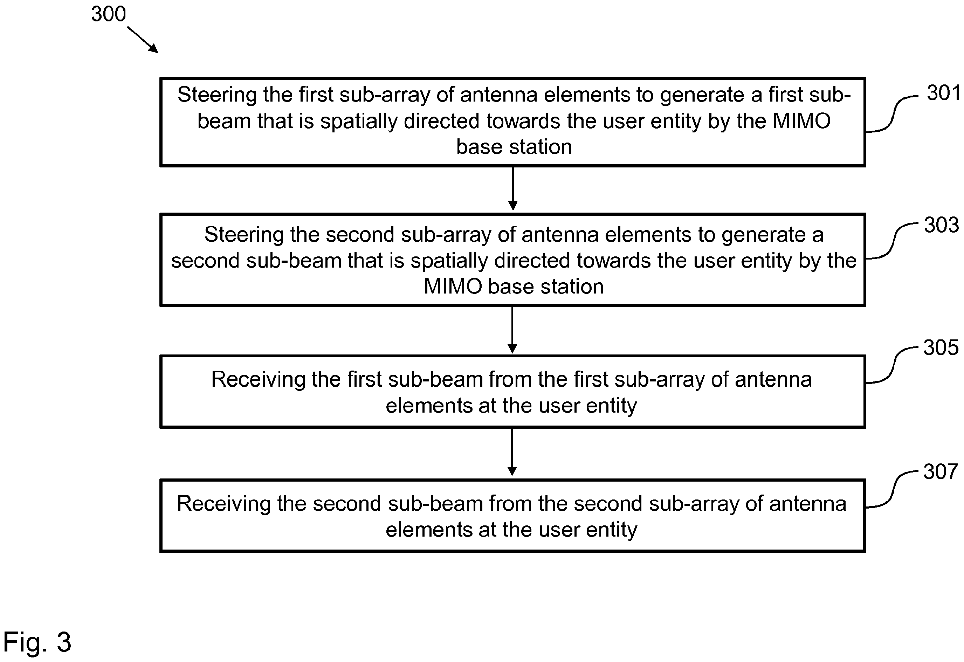

Figure 3 shows a diagram illustrating a corresponding communication method 300 for transmitting data towards a user entity 205 in a communication network 200 comprising a base station system, wherein the base station system comprises: a distributed beamforming antenna 203a-c having a first sub-array of antenna elements 203a and a second sub-array of antenna elements 203b, the first sub-array of antenna elements 203a and the second sub-array of antenna elements 203b forming a composite array of antenna elements for generating a composite transmission beam 207 and being arranged spaced apart from each other. The base station system further comprises a multiple-in-multiple-out (MIMO) base station 201 that is configured to handle communications of the user entity 205 in the communication cell using beamforming.

The communication method 300 comprises the following steps: a first step 301 of steering the first sub-array of antenna elements 203a to generate a first sub-beam 204a that is spatially directed towards the user entity 205 by the MIMO base station 101; a second step 303 of steering the second sub-array of antenna elements 203b to generate a second sub-beam 204b that is spatially directed towards the user entity 205 by the MIMO base station 201; a third step 305 of receiving the first sub-beam 204a from the first sub-array of antenna elements 203a at the user entity 205; and a final step 307 of receiving the second sub-beam 204b from the second sub-array of antenna elements 203b at the user entity 205, wherein the first sub-array of antenna elements 203a is co-located with the MIMO base station 201 and the second sub-array of antenna elements 203b is spaced apart from the MIMO base station 201 and wherein the first sub-beam 204a and the second sub-beam 204b superimpose to the composite transmission beam 207.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A base station system which is configured for transmitting data towards a user entity (205) using beamforming, the base station system comprising:
a distributed beamforming antenna having a first sub-array of antenna elements (203a) and a second sub-array of antenna elements (203b), the first sub-array of antenna elements (203a) and the second sub-array of antenna elements (203b) forming a composite array of antenna elements for generating a composite transmission beam (207) and being arranged spaced apart from each other;
a multiple-in-multiple-out (MIMO) base station (201) that is configured to handle communications of the user entity (205) in the communication cell using beamforming;
wherein the first sub-array of antenna elements (203a) is co-located with the MIMO base station (201); wherein the second sub-array of antenna elements (203b) is spaced apart from the MIMO base station (201); and wherein
the MIMO base station (201) is configured to steer the first sub-array of antenna elements (203a) to generate a first sub-beam (204a) that is spatially directed towards the user entity (205), and to steer the second sub-array of antenna elements (203b) to generate a second sub-beam (204b) that is spatially directed towards the user entity (205), wherein the first sub-beam (204a) and the second sub-beam (204b) superimpose to the composite transmission beam (207).

2. The base station system according to claim 1, wherein the MIMO base station (201) is configured to provide a first steering signal to the first sub-array of antenna elements (203a) for generating the first sub-beam (204a), and to transmit a second steering signal to the second sub-array of antenna elements (203b) for generating the second sub-beam (204b).

3. The base station system according to claim 2, wherein the second sub-array of antenna elements (203b) is connected to the MIMO base station (201) using a fixed line, in particular a glass fiber, and wherein the MIMO base station (201) is configured to transmit the second steering signal to the second sub-array of antenna elements (203b), or wherein the MIMO base station (201) is configured to transmit a steering beam spatially directed towards the second sub-array of antenna elements (203b) with the second steering signal, and wherein the second sub-array of antenna elements (203b) is configured to receive the steering beam with the second steering signal, and to generate the second sub-beam (204b).

4. The base station system according to claim 3, wherein the MIMO base station (201) is configured to retrieve the first phase information and the second phase information from a memory, in particular comprising a beamforming codebook, indicating phase information versus a direction of the respective sub-beam or versus a direction of the composite transmission beam (207).

5. The base station system according to any one of the preceding claims, wherein the second sub-array of antenna elements (203b) is configured to receive a transmission beam carrying user data from the user entity (205), and to forward the user data using a forwarding beam directed towards the base station (201).

6. The base station system according to any one of the preceding claims, wherein the distributed beamforming antenna comprises a plurality of sub-array of antenna elements (203a-c) arranged spaced apart from the base station (201), the second sub-array of antenna elements (203b) belonging to the plurality of sub-array of antenna elements (203a-c), wherein the MIMO base station (201) is configured to steer the each sub-array of antenna elements (203a-c) to generate a further sub-beam (204c) that is spatially directed towards the user entity (205).

7. The base station system according to claim 6, wherein the MIMO base station (201) is configured to select the second sub-array (203b) from the plurality of sub-arrays (203a-c) for generating the second sub-beam (204b) upon the basis of a link quality between the user entity (205) and the sub-arrays of antenna elements (203a-c) or a location of the second sub-array (203a-c) in the communication cell.

8. The base station system according to claim 7, wherein the sub-arrays of antenna elements (203a-c) or the user entity (205) are configured to measure the link quality, and transmit the measured link quality, in particular using beamforming, to the MIMO base station (201).

9. The base station system according to claim 7 or 8, wherein the link quality is determined at least one or a combination of the following measures: data rate, bite error rate, communication delay, packet error rate, communication bandwidth, quality of service indication, data priority, user service level agreement, in particular user priority.

10. The base station system according to any one of the preceding claims, wherein the MIMO base station (201) is configured to replace the second sub-array of antenna elements (203b) by another sub-array of antenna elements, if a link quality between the second sub-array of antenna elements (203b) and the user entity (205) has deteriorated, in particular due to mobility of the user entity (205), the other sub-array of antenna elements becoming the second sub-array (203b) after replacement.

11. The base station system according to any one of the preceding claims, wherein the MIMO base station (201) is configured to handle communications in the communication cell using beamforming according the fifth generation (5G) communication technology or higher, and/or wherein the respective sub array of antenna elements (203a-c) is configured to transmit data according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

12. A user entity (205) that is configured to communicate with and receive data from the base station system in a communication cell according to any one of the preceding claims 1 to 19, the base station system comprising: a distributed beamforming antenna having a first sub-array of antenna elements (203a) and a second sub-array of antenna elements (203b), the first sub-array of antenna elements (203a) and the second sub-array of antenna elements (203b) forming a composite array of antenna elements for generating a composite transmission beam (207) and being arranged spaced apart from each other; and a multiple-in-multiple-out (MIMO) base station (201) that is configured to handle communications of the user entity (205) in the communication cell using beamforming, the MIMO base station (205) being configured to steer the first sub-array of antenna elements (203a) to generate a first sub-beam (204a) that is spatially directed towards the user entity (205), and to steer the second sub-array of antenna elements (203b) to generate a second sub-beam (204b) that is spatially directed towards the user entity (205), the user entity (205) being configured to:
receive the first sub-beam (204a) from the first sub-array of antenna elements (203a), and
receive the second sub-beam (204b) from the second sub-array of antenna elements (203b); wherein
the first sub-array of antenna elements (203a) is co-located with the MIMO base station (201) and the second sub-array of antenna elements (203b) is spaced apart from the MIMO base station (201), and wherein
the first sub-beam (204a) and the second sub-beam (204b) superimpose to the composite transmission beam (207).

13. A communication method (300) for transmitting data towards a user entity (205) in a communication cell comprising a base station system, the base station system comprising: a distributed beamforming antenna having a first sub-array of antenna elements (203a) and a second sub-array of antenna elements (203b), the first sub-array of antenna elements (203a) and the second sub-array of antenna elements (203b) forming a composite array of antenna elements for generating a composite transmission beam (207) and being arranged spaced apart from each other; and a multiple-in-multiple-out (MIMO) base station (201) that is configured to handle communications of the user entity (205) in the communication cell using beamforming, the communication method (300) comprising:
steering (301) the first sub-array of antenna elements (203a) to generate a first sub-beam (204a) that is spatially directed towards the user entity (205) by the MIMO base station (201);
steering (303) the second sub-array of antenna elements (203b) to generate a second sub-beam (204b) that is spatially directed towards the user entity (205) by the MIMO base station (201);
receiving (305) the first sub-beam (204a) from the first sub-array of antenna elements (203a) at the user entity (205); and
receiving (307) the second sub-beam (204b) from the second sub-array of antenna elements (203b) at the user entity (205); wherein
the first sub-array of antenna elements (203a) is co-located with the MIMO base station (201) and the second sub-array of antenna elements (203b) is spaced apart from the MIMO base station (201); and wherein
the first sub-beam (204a) and the second sub-beam (204b) superimpose to the composite transmission beam (207).

14. A computer program comprising a computer readable program code which, when executed on the base station system according to any one of the preceding claims 1 to 11, and/or on the user entity (205) according to claim 12, performs the method (300) according to claim 13.

15. A computer program product comprising the computer program according to claim 14.

## Amended claims

### Amended claims in accordance with Rule 137(2) EPC.

1. A base station system which is configured for transmitting data towards a user entity (205) using beamforming, the base station system comprising:
a distributed beamforming antenna having a first sub-array of antenna elements (203a) and a second sub-array of antenna elements (203b), the first sub-array of antenna elements (203a) and the second sub-array of antenna elements (203b) forming a composite array of antenna elements for generating a composite transmission beam (207) and being arranged spaced apart from each other;
a multiple-in-multiple-out (MIMO) base station (201) that is configured to handle communications of the user entity (205) in the communication cell using beamforming;
wherein the first sub-array of antenna elements (203a) is co-located with the MIMO base station (201); wherein the second sub-array of antenna elements (203b) is spaced apart from the MIMO base station (201); and wherein
the MIMO base station (201) is configured to steer the first sub-array of antenna elements (203a) to generate a first sub-beam (204a) that is spatially directed towards the user entity (205), and to steer the second sub-array of antenna elements (203b) to generate a second sub-beam (204b) that is spatially directed towards the user entity (205), wherein the first sub-beam (204a) and the second sub-beam (204b) superimpose to form the composite transmission beam (207), wherein the second sub-array of antenna elements (203b) is connected to the MIMO base station (201) using a fixed line and wherein the MIMO base station (201) is configured to transmit a second steering signal to the second sub-array of antenna elements (203b), or wherein the MIMO base station (201) is configured to transmit a steering beam spatially directed towards the second sub-array of antenna elements (203b) with the second steering signal, and wherein the second sub-array of antenna elements (203b) is configured to receive the steering beam with the second steering signal, and to generate the second sub-beam (204b).

2. The base station system according to claim 1, wherein the MIMO base station (201) is configured to provide a first steering signal to the first sub-array of antenna elements (203a) for generating the first sub-beam (204a), and to transmit the second steering signal to the second sub-array of antenna elements (203b) for generating the second sub-beam (204b).

3. The base station system according to claim 1 or 2, wherein the MIMO base station (201) is configured to retrieve a first phase information and a second phase information from a memory, indicating phase information versus a direction of the respective sub-beam or versus a direction of the composite transmission beam (207).

4. The base station system according to any one of the preceding claims, wherein the second sub-array of antenna elements (203b) is configured to receive a transmission beam carrying user data from the user entity (205), and to forward the user data using a forwarding beam directed towards the base station (201).

5. The base station system according to any one of the preceding claims, wherein the distributed beamforming antenna comprises a plurality of sub-array of antenna elements (203a-c) arranged spaced apart from the base station (201), the second sub-array of antenna elements (203b) belonging to the plurality of sub-array of antenna elements (203a-c), wherein the MIMO base station (201) is configured to steer the each sub-array of antenna elements (203a-c) to generate a further sub-beam (204c) that is spatially directed towards the user entity (205).

6. The base station system according to claim 5, wherein the MIMO base station (201) is configured to select the second sub-array (203b) from the plurality of sub-arrays (203a-c) for generating the second sub-beam (204b) upon the basis of a link quality between the user entity (205) and the sub-arrays of antenna elements (203a-c) or a location of the second sub-array (203a-c) in the communication cell.

7. The base station system according to claim 6, wherein the sub-arrays of antenna elements (203a-c) or the user entity (205) are configured to measure the link quality, and transmit the measured link quality, in particular using beamforming, to the MIMO base station (201).

8. The base station system according to claim 6 or 7, wherein the link quality is determined at least one or a combination of the following measures: data rate, bite error rate, communication delay, packet error rate, communication bandwidth, quality of service indication, data priority, user service level agreement, and user priority.

9. The base station system according to any one of the preceding claims, wherein the MIMO base station (201) is configured to replace the second sub-array of antenna elements (203b) by another sub-array of antenna elements, if a link quality between the second sub-array of antenna elements (203b) and the user entity (205) has deteriorated, the other sub-array of antenna elements becoming the second sub-array (203b) after replacement.

10. The base station system according to any one of the preceding claims, wherein the MIMO base station (201) is configured to handle communications in the communication cell using beamforming according the fifth generation (5G) communication technology, and/or wherein the respective sub array of antenna elements (203a-c) is configured to transmit data according to one of the following communication technologies: GSM, LTE, LTE-A, UMTS, HSPA, 3GPP, 3GPP NR, New Radio, 5G or IEEE radio systems such as Wireless LAN.

11. A user entity (205) that is configured to communicate with and receive data from a base station system in a communication cell according to any one of the preceding claims 1 to 10, the base station system comprising: a distributed beamforming antenna having a first sub-array of antenna elements (203a) and a second sub-array of antenna elements (203b), the first sub-array of antenna elements (203a) and the second sub-array of antenna elements (203b) forming a composite array of antenna elements for generating a composite transmission beam (207) and being arranged spaced apart from each other; and a multiple-in-multiple-out (MIMO) base station (201) that is configured to handle communications of the user entity (205) in the communication cell using beamforming, the MIMO base station (205) being configured to steer the first sub-array of antenna elements (203a) to generate a first sub-beam (204a) that is spatially directed towards the user entity (205), and to steer the second sub-array of antenna elements (203b) to generate a second sub-beam (204b) that is spatially directed towards the user entity (205), the user entity (205) being configured to:
receive the first sub-beam (204a) from the first sub-array of antenna elements (203a), and
receive the second sub-beam (204b) from the second sub-array of antenna elements (203b); wherein
the first sub-array of antenna elements (203a) is co-located with the MIMO base station (201) and the second sub-array of antenna elements (203b) is spaced apart from the MIMO base station (201), and wherein
the first sub-beam (204a) and the second sub-beam (204b) superimpose to form the composite transmission beam (207), wherein the second sub-array of antenna elements (203b) is connected to the MIMO base station (201) using a fixed line and wherein the MIMO base station (201) is configured to transmit a second steering signal to the second sub-array of antenna elements (203b), or wherein the MIMO base station (201) is configured to transmit a steering beam spatially directed towards the second sub-array of antenna elements (203b) with the second steering signal, and wherein the second sub-array of antenna elements (203b) is configured to receive the steering beam with the second steering signal, and to generate the second sub-beam (204b).

12. A communication method (300) for transmitting data towards a user entity (205) in a communication cell comprising a base station system, the base station system comprising: a distributed beamforming antenna having a first sub-array of antenna elements (203a) and a second sub-array of antenna elements (203b), the first sub-array of antenna elements (203a) and the second sub-array of antenna elements (203b) forming a composite array of antenna elements for generating a composite transmission beam (207) and being arranged spaced apart from each other; and a multiple-in-multiple-out (MIMO) base station (201) that is configured to handle communications of the user entity (205) in the communication cell using beamforming, the communication method (300) comprising:
steering (301) the first sub-array of antenna elements (203a) to generate a first sub-beam (204a) that is spatially directed towards the user entity (205) by the MIMO base station (201);
steering (303) the second sub-array of antenna elements (203b) to generate a second sub-beam (204b) that is spatially directed towards the user entity (205) by the MIMO base station (201);
receiving (305) the first sub-beam (204a) from the first sub-array of antenna elements (203a) at the user entity (205); and
receiving (307) the second sub-beam (204b) from the second sub-array of antenna elements (203b) at the user entity (205); wherein
the first sub-array of antenna elements (203a) is co-located with the MIMO base station (201) and the second sub-array of antenna elements (203b) is spaced apart from the MIMO base station (201); and wherein
the first sub-beam (204a) and the second sub-beam (204b) superimpose to form the composite transmission beam (207), wherein the second sub-array of antenna elements (203b) is connected to the MIMO base station (201) using a fixed line and wherein the MIMO base station (201) is configured to transmit a second steering signal to the second sub-array of antenna elements (203b), or wherein the MIMO base station (201) is configured to transmit a steering beam spatially directed towards the second sub-array of antenna elements (203b) with the second steering signal, and wherein the second sub-array of antenna elements (203b) is configured to receive the steering beam with the second steering signal, and to generate the second sub-beam (204b).

13. A computer program comprising a computer readable program code which, when executed on the base station system according to any one of the preceding claims 1 to 10, and/or on the user entity (205) according to claim 11, performs the method (300) according to claim 12.
